**Europäisches Patentamt**

**European Patent Office**

**Office européen des brevets**

(19)

(11) Veröffentlichungsnummer: **0 008 009**
**A1**

(12)

# EUROPÄISCHE PATENTANMELDUNG

(21) Anmeldenummer: 79102393.0

(22) Anmeldetag: 11.07.79

(51) Int. Cl.³: **H 04 N 5/92**

(30) Priorität: 10.08.78 DE 2835130

(43) Veröffentlichungstag der Anmeldung: 20.02.80
Patentblatt 80/4

(84) Benannte Vertragsstaaten: **BE FR GB IT NL**

(71) Anmelder: **SIEMENS AKTIENGESELLSCHAFT Berlin
und München, Postfach 261, D-8000 München 22 (DE)**

(72) Erfinder: **Pfleiderer, Hans-Jörg, Dr., Franz-Krinninger-
Weg 23, D-8011 Zorneding (DE)**
Erfinder: **Koubek, Michael, Dipl.-Phys.,
Ortlindestrasse 2, D-8000 München 81 (DE)**
Erfinder: **Stein, Karl-Ulrich, Dr.,
Germersheimerstrasse 5, D-8000 München 90 (DE)**
Erfinder: **Christiansen, Hans-Martin, Dipl.-Ing.,
Minorstrasse 12a, D-8000 München 71 (DE)**

(54) **Verfahren und Schaltungsanordnung zum Speichern von Videosignalen.**

(57)  Die Erfindung bezieht sich auf ein Verfahren zum Speichern von Videosignalen ($u_v$) auf einem bandförmigen, kontinuierlich bewegbaren, magnetischen Aufzeichnungsträger (3) mit einer Zerlegung der Videosignale in mehrere Teilsignale und gleichzeitiger Aufzeichnung derselben in mehrere zueinander parallelen Längsspuren, sowie auf eine Schaltungsanordnung zur Durchführung des Verfahrens. Bei Verfahren dieser Art wird angestrebt, die gegenseitigen Beeinflussungen der einzelnen zu speichernden Bildinformationen auch bei einer großen Aufzeichnungsdichte auf ein geringes Maß zu reduzieren. Das wird erfindungsgemäß dadurch erreicht, daß die Zeilensignale ($Z_1 \ldots Z_n$, $Z_{n+1} \ldots Z_{2n}$) des Videosignals als Teilsignale benutzt werden, wobei die zu einem Fernsehbild gehörenden Zeilensignale zu wenigstens einer Gruppe zusammengefaßt und gruppenweise nacheinander aufgezeichnet werden. Sämtliche zu ein und derselben Gruppe gehörenden Zeilensignale ($Z_1 \ldots Z_n$) werden nach einer Zwischenspeicherung gleichzeitig auf n Längsspuren aufgezeichnet. Der Anwendungsbereich der Erfindung umfaßt Videorecorder mit Längsspurenaufzeichnung.

SIEMENS AKTIENGESELLSCHAFT                Unser Zeichen
Berlin und München                        VPA 78 P 7 0 8 2


Verfahren und Schaltungsanordnung zum Speichern von
Videosignalen

Die Erfindung bezieht sich auf ein Verfahren zum Speichern
von Videosignalen auf einem bandförmigen, kontinuierlich
bewegbaren magnetischen Aufzeichnungsträger mit einer
Zerlegung des Videosignals in mehrere Teilsignale und
gleichzeitiger Aufzeichnung derselben in mehreren zueinander parallelen Längsspuren.

In der deutschen Patentanmeldung P 27 08 672.2 (VPA 77P6541)
ist ein Verfahren dieser Art vorgeschlagen worden, bei
dem das zu speichernde Videosignal in eine Mehrzahl von
Teilsignalen geringerer Bandbreite zerlegt wird. Dabei
werden die einzelnen Teilsignale entweder durch eine
Zerlegung des Videosignals in durch Bandpässe definierte,
zueinander benachbarte Teilfrequenzbänder oder durch
eine periodische Abtastung des Videosignals erhalten.

Der vorliegenden Erfindung liegt die Aufgabe zugrunde, ein

St 1 Kow / 2.8.1978

weiteres Verfahren der eingangs genannten Art anzugeben, bei dem die gegenseitigen Beeinflussungen der einzelnen zu speichernden Informationen auch bei einer großen Aufzeichnungsdichte auf ein geringes Maß reduziert werden.

Das wird gemäß der Erfindung durch die im kennzeichnenden Teil des Patentanspruchs 1 angegebenen, bei der Aufzeichnung des zu speichernden Videosignals zu treffenden Maßnahmen erreicht. Der mit der Erfindung erzielbare Vorteil besteht insbesondere darin, daß alle diejenigen gespeicherten Informationen, die einen bestimmten Teilbereich des Fernsehbildes betreffen, auf dem Aufzeichnungsträger in einer räumlichen Zuordnung zueinander angeordnet sind, die der räumlichen Zuordnung der entsprechenden Bildpunkte des Fernsehbildes gleichkommt. Beeinflussungen der zu einem solchen Teilbereich gehörenden Informationen untereinander, die bei einer großen Aufzeichnungsdichte und insbesondere bei einem sehr geringen gegenseitigen Abstand der Längsspuren auftreten können, haben daher außer einer gewissen Reduzierung der Bildauflösung keine nachteiligen Auswirkungen.

Nach einer bevorzug/ten Weiterbildung des Verfahrens werden bei einer Wiedergabe des aufgezeichneten Videosignals die im kennzeichnenden Teil des Patentanspruchs 2 angegebenen Maßnahmen getroffen. Andere vorteilhafte Weiterbildungen des Verfahrens nach der Erfindung sind in den Patentansprüchen 3 bis 10 aufgeführt.

Eine Schaltungsanordnung zur Durchführung des erfindungsgemäßen Verfahrens ist in Form von verschiedenen Ausgestaltungen in den Patentansprüchen 11 bis 17; gekennzeichnet.

Im folgenden wird die Erfindung anhand der Zeichnung näher erläutert.

Dabei zeigt:

Figur 1 die schematische Darstellung einer zur erfindungsgemäßen Aufzeichnung eines Videosignals geeigneten Schaltungsanordnung,

Figur 2 die erfindungsgemäße Zerlegung eines Fernsehbildes in Teilsignalgruppen,

Figur 3 die schematische Darstellung einer zur Wiedergabe eines erfindungsgemäß aufgezeichneten Videosignals geeigneten Schaltungsordnung,

Figur 4 eine erste Ausgestaltung einer Teilschaltung
von Figur 1,

Figur 5 eine zweite Ausgestaltung derselben Teilschaltung,

Figur 6 eine Weiterbildung der Schaltungsanordnung von
Figur 1,

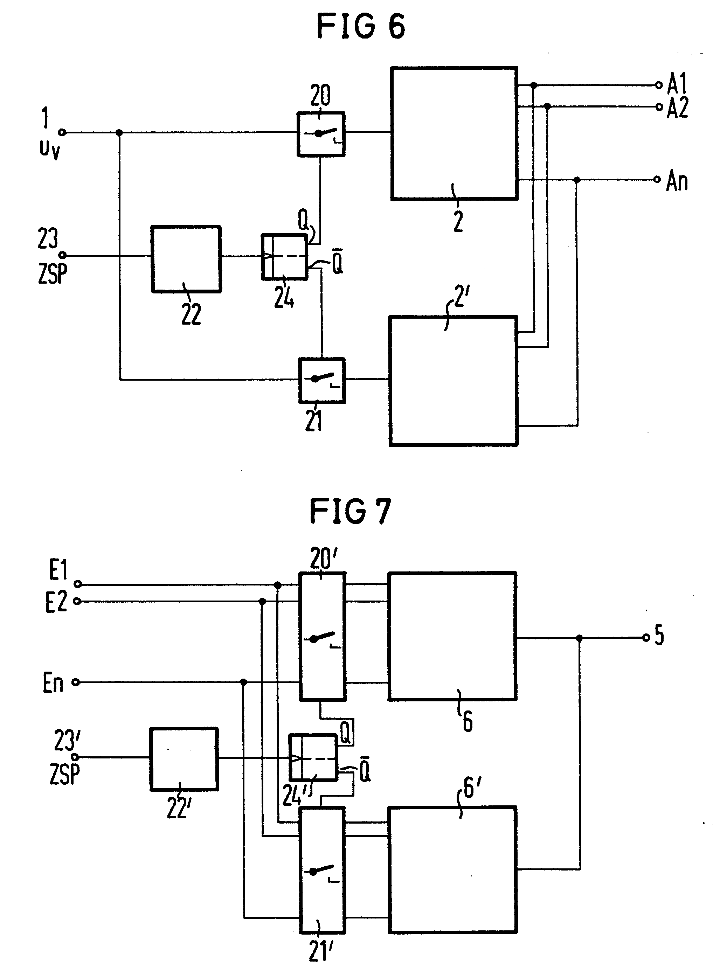

Figur 7 eine Weiterbildung der Schaltungsanordnung von
Figur 3,

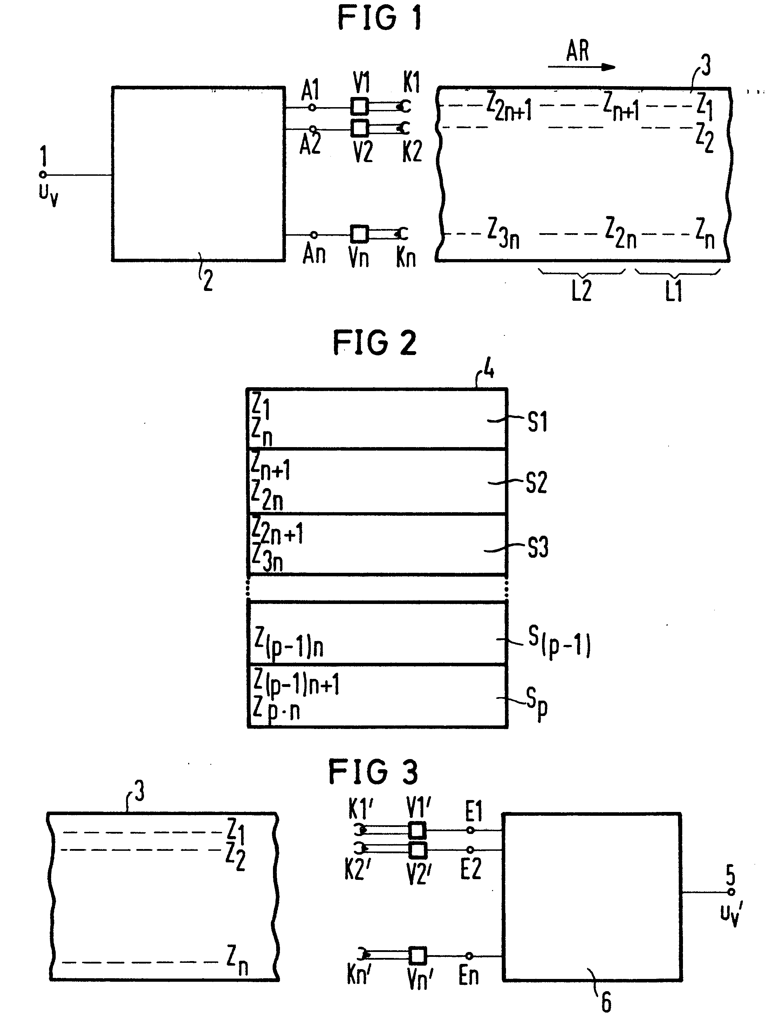

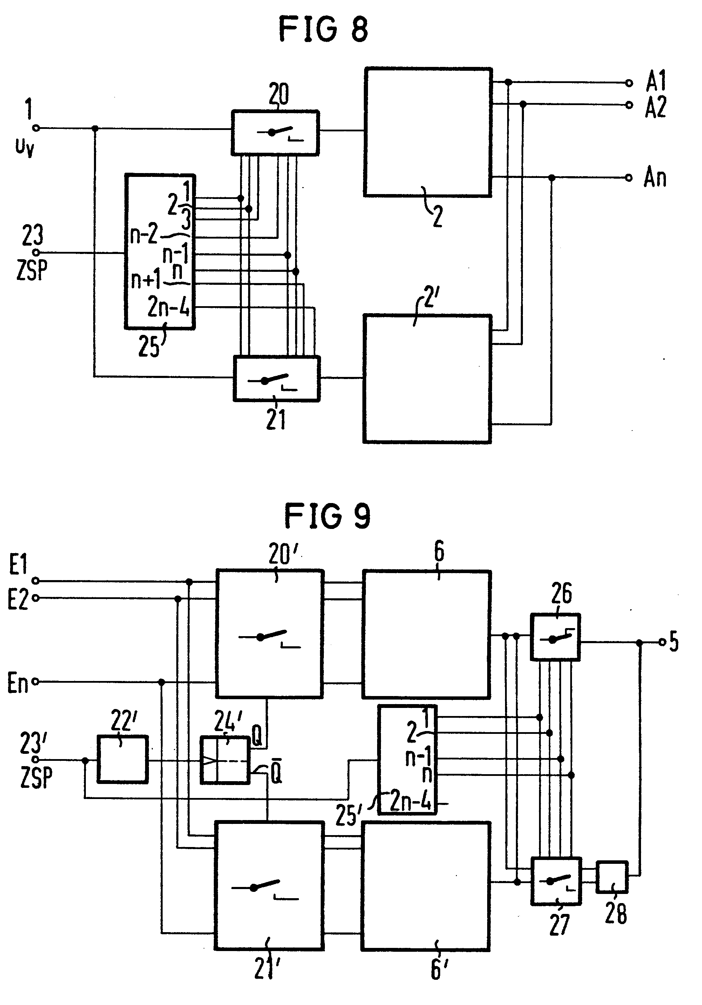

Figur 8 eine andere Weiterbildung der Schaltungsanordnung von Figur 1,

Figur 9 eine andere Weiterbildung der Schaltungsanordnung von Figur 3 und

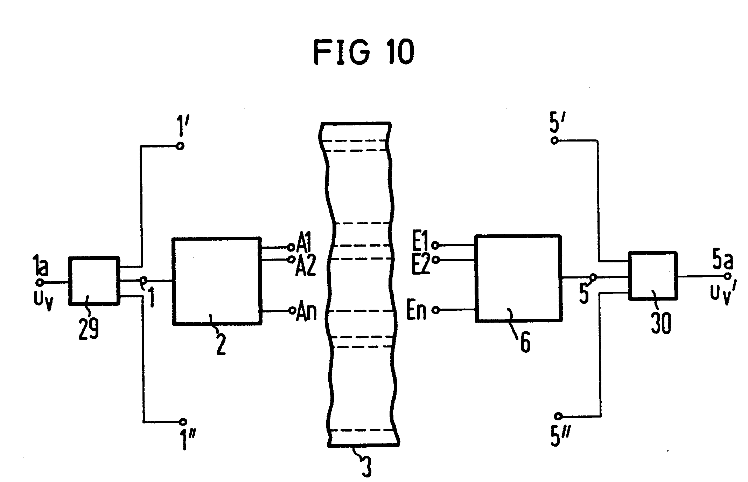

Figur 10 eine Weiterbildung der in den Figuren 1 und 3
dargestellten Schaltungsanordnungen.

In Figur 1 wird ein zu speicherndes Videosignal $u_v$ über
einen Schaltungseingang 1 einer Speicheranordnung 2 zugeführt, die mit n Ausgängen A1 bis An versehen ist. Diesen
Ausgängen sind jeweils Verstärker V1 bis Vn nachgeschaltet, die elektromagnetische Schreibköpfe K1 bis Kn
mit den aufzuzeichnenden Signalen belegen. Auf einem
kontinuierlich in Pfeilrichtung AR bewegbaren Aufzeichnungsträger 3, z.B. einem Magnetband, sind dann n
zueinander parallele, den Schreibköpfen zugeordnete, in
Längsrichtung verlaufende Aufzeichnungsspuren vorhanden.

Wenn ein Fernsehbild 4 gemäß Figur 2 aus z.B. p.n Zeilen $Z_1$ bis $Z_{p.n}$ zusammengesetzt ist, wobei in jeder Zeile die Helligkeitsinformationen von z.B. 420 Bildpunkten enthalten sind, so besteht das Videosignal $u_v$ aus p.n nacheinander auftretenden Zeilensignalen mit jeweils 420 nacheinander abtastbaren Amplitudenwerten. Erfindungsgemäß werden jeweils n Zeilensignale zu einer Gruppe zusammengefaßt und in der Speicheranordnung 2 zwischengespeichert. Danach werden sie über die Ausgänge A1 bis An und die Verstärker V1 bis Vn den Schreibköpfen K1 bis Kn zugeführt und parallel zueinander in n Längsspuren aufgezeichnet. Zur besseren Übersicht sind die Längsspuren in Figur 1 durch die Zeilensymbole $Z_1$ bis $Z_n$ der in ihnen aufgezeichneten Zeilensignale gekennzeichnet. Man erkennt, daß sämtliche zu einem ersten horizontalen Streifen S1 gehörenden Informationen des Fernsehbildes 4 als Informationsblock, bestehend aus n Zeilen und 420 Spalten, auf einer Länge L1 des Aufzeichnungsträgers 3 gespeichert sind, wobei die Aufzeichnungsdichte bei eng nebeneinander liegenden Längsspuren sehr groß ist.

In gleicher Weise erfolgt eine Zwischenspeicherung der die Zeilen $Z_{n+1}$ bis $Z_{2n}$ des zweiten Streifens S2 wiedergebenden Zeilensignale, die eine zweite Gruppe darstellen, in der Speicheranordnung 2 und ihre Aufzeichnung in dem Abschnitt L2 von 3. Da auch die weiteren Streifen S3 bis Sp des Fernsehbildes 4 und die Streifen der folgenden Fernsehbilder in gleicher Weise aufgezeichnet werden, entsteht eine Folge von Informationsblöcken, deren einzelne gespeicherte Informationswerte auf dem Aufzeichnungsträger 3 jeweils in der gleichen gegenseitigen räumlichen Zuordnung stehen wie die entsprechenden Bildpunkte innerhalb der einzelnen Bildstreifen S1 bis Sp.

Figur 3 zeigt das Auslesen der auf dem Aufzeichnungsträger 3

0008009

gespeicherten Informationen und ihre Zusammensetzung zu einem am Ausgang 5 auftretenden Videosignal $u_v'$, das dem Signal $u_v$ entspricht. Hierzu sind elektromagnetische Leseköpfe K1' bis Kn' vorgesehen, die die einzelnen Zeilensignale der jeweils auszulesenden Gruppe parallel aufnehmen. Die Zeilensignale werden dann individuell zugeordneten Eingängen E1 bis En einer weiteren Speicheranordnung 6 zugeführt, in dieser zwischengespeichert und dann seriell ausgegeben, wobei am Schaltungspunkt 5 aus den jeweils nacheinander auftretenden Zeilensignalen ein und derselben Gruppe und den nacheinander auftretenden Signalen der verschiedenen Gruppen das Videosignal $u_v'$ gebildet wird.

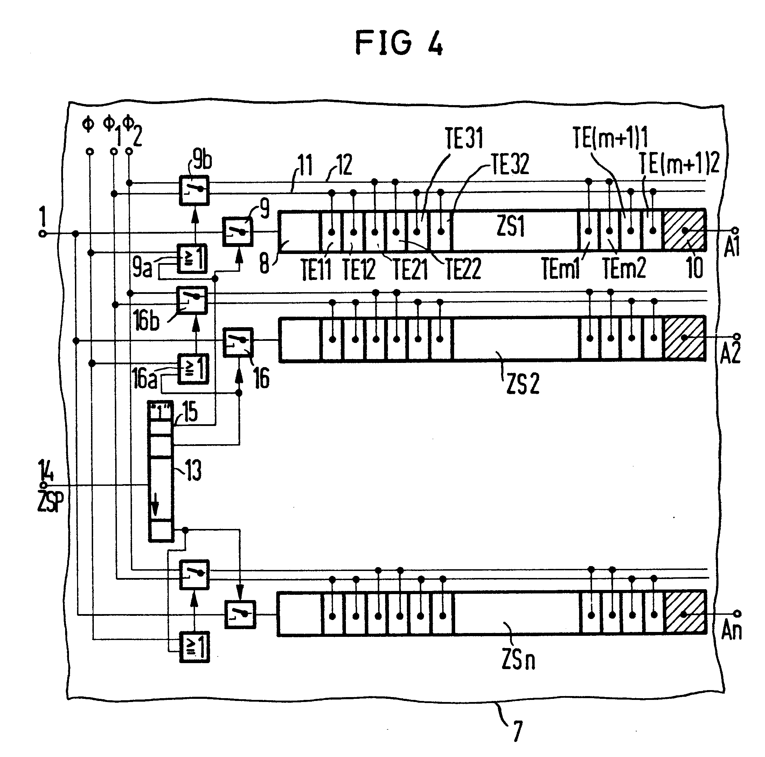

In Figur 4 ist eine bevorzugte Ausführungsform der Speicheranordnung 2 dargestellt. Sie besteht aus Zeilenspeichern ZS1 bis ZSn, die den n Zeilensignalen einer Gruppe jeweils individuell zugeordnet sind. Im einzelnen wird das die Bildzeile $Z_1$ beschreibende Zeilensignal im Zeilenspeicher ZS1 zwischengespeichert, das die Bildzeile $Z_2$ beschreibende Zeilensignal im Zeilenspeicher ZS2 usw. Der Aufbau der untereinander gleichen Zeilenspeicher sei anhand von ZS1 näher erläutert. Dieser besteht aus einer auf einem Halbleitersubstrat 7 integrierten ladungsgekoppelten Vorrichtung, die auch als "Charge Coupled Device" bzw. CCD bezeichnet wird. Dabei ist das Halbleitersubstrat 7, das z.B. aus P-leitendem Silizium hergestellt ist, von einer elektrisch isolierten Schicht, z.B. aus $SiO_2$, bedeckt. Auf dieser befinden sich eine Reihe von eng nebeneinander angeordneten Elektroden TE11, TE12, TE21, TE22, .... TEm1, TEm2, TE(m+1)1 und TE(m+1)2, die beispielsweise aus hochdotiertem, polykristallinen Silizium oder aus Aluminium bestehen. Eine der ersten Elektrode TE11 vorgeordnete Eingangsstufe ist mit 8 bezeichnet. Sie ist über einen Schalter 9 mit dem Schaltungseingang 1 (Figur 1) verbunden. 10 bedeutet eine Ausgangsstufe, die als ein N-dotiertes Diffusionsgebiet ausgebildet ist und einen Anschluß aufweist, der mit dem Speicherausgang A1 verbunden ist.

Die ungeradzahligen Elektrodenpaare TE11, TE12; TE31, TE32; zu denen auch das Paar TE(m+1)1, TE(m+1)2 gehören soll, sind über eine Leitung 11 und einen Schalter 9b an eine Taktimpulsspannung $\emptyset_1$, die geradzahligen Elektrodenpaare TE21, TE22; TE41, TE42 ..., zu denen auch das Paar TEm1, TEm2 gehören soll, über eine Leitung 12 und den Schalter 9b an eine Taktimpulsspannung $\emptyset_2$ anschaltbar. Die das Halbleitersubstrat 7 bedeckende, elektrisch isolierende Schicht ist unterhalb der Elektroden TE11, TE21, TE31 usw. dicker ausgebildet als unterhalb der Elektroden TE12, TE22, TE32 usw. Tritt ein Taktimpuls $\emptyset_1$ auf der Leitung 11 auf, so befinden sich unterhalb der Elektroden TE12, TE32 usw. lokale Maxima des Oberflächenpotentials des Halbleitersubstrats 7, die als Potentialtöpfe bezeichnet werden, während unterhalb der Elektroden TE11, TE31 usw. wegen der dickeren elektrisch isolierenden Schicht kleinere Werte des Oberflächenpotentials vorhanden sind. Wird nun während des Auftretens eines Taktimpulses $\emptyset_1$ auf der Leitung 11 von der Eingangsstufe 8 bei anliegendem Signal $u_v$ eine Anzahl von Minoritätsladungsträgern, d.h. Elektronen im Falle eines P-leitenden Substrats 7, in das Substrat injiziert, so sammeln sich diese im Bereich des ersten Maximums des Oberflächenpotentials, also unter der Elektrode TE12. Beim Auftreten des nächstfolgenden Taktimpulses $\emptyset_2$ auf der Leitung 12 und nach Beendigung von $\emptyset_1$ befinden sich dann lokale Maxima des Oberflächenpotentials unterhalb von TE22, TE42 usw. einschließlich TEm2, wobei die vorher unterhalb von TE12 befindlichen Ladungsträger, die man auch als ein Ladungspaket bezeichnet, in den unterhalb von TE22 liegenden oberflächenseitigen Substratbereich verschoben werden. Beim
nächsten Taktimpuls $\phi_1$ gelangt dann dieses Ladungspaket
weiter in den Bereich unterhalb von TE32, während ein
weiteres, von der Eingangsstufe 8 injiziertes Ladungspaket in den Potentialtopf unterhalb von TE12 gelangt.

Die Schalter 9 und 9b sind während des Auftretens eines
in ZS1 zu speichernden Zeilensignals in einer solchen
Schaltstellung, daß 8 mit 1, 11 mit $\phi_1$ und 12 mit $\phi_2$
verbunden werden. Hierzu ist ein Schieberegister 13 vorgesehen, in dem lediglich eine logische Information "1"
im Takte von am Eingang 14 auftretenden Zeilensynchronisierimpulsen ZSP des Videosignals $u_v$ in Pfeilrichtung
von oben nach unten verschoben wird, während die gerade
nicht mit der "1" belegten Stufen jeweils eine "0" aufweisen. Im Ausgangszustand befindet sich die elektrische
Information "1" in der obersten Stufe von 13. Beim Auftreten des Zeilensynchronisierimpulses ZSP, der dem die
erste Zeile $Z_1$ beschreibenden Zeilensignal zugeordnet
ist, wird die "1" in die darunterliegende Stufe verschoben, deren Ausgang 15 dann spannungsführend ist und
die Schalter 9 und 9b in die genannten Schaltstellungen
bringt. Dabei beeinflußt der Ausgang 15 den Steuereingang des Schalters 9b über ein ODER-Gatter 9a.

Durch die Funktion der Eingangsstufe 8, auf die noch
später hingewiesen wird, erhält man sodann im Takte von
$\phi_1$ jeweils einzelne Ladungspakete, deren Größen äquidistanten Momentanwerten der Amplitude des Videosignals $u_v$ proportional sind. Diese werden im Takte von $\phi_1$ schrittweise
um jeweils vier Elektrodenabstände in Richtung auf die
Ausgangsstufe 10 verschoben, was solange fortgesetzt
wird, bis die den Bildpunkten der ersten Zeile $Z_1$ zugeordneten Abtastwerte des Zeilensignals durch entsprechend viele Ladungspakete unterhalb von TEm2 bis TE12 gespeichert sind. Bei m = 420 werden also 420 Abtastwerte in den Zeilenspeicher ZS1 eingeschrieben.

Mit dem Auftreten des nächsten Zeilensynchronisierimpulses ZSP werden dann über die nächste Stufe des Schieberegisters 13 die Schalter 16 und 16b betätigt, letzterer über das ODER-Gatter 16a, während 9 und 9b gesperrt werden, so daß eine entsprechende Einspeicherung der Abtastwerte des folgenden Zeilensignals in den zweiten Zeilenspeicher ZS erfolgt. Während dieser Einspeicherung werden nur die Elektroden dieses Zeilenspeichers in der bereits beschriebenen Weise mit den Taktimpulsspannungen $\emptyset_1$ und $\emptyset_2$ beaufschlagt. Die Elektroden der übrigen Zeilenspeicher sind über die in der gezeichneten Ausgangsstellung befindlichen Schalter, z.B. 9b, mit einem Potential beschaltet, das der Amplitude eines Taktimpulses, nämlich $\emptyset_1$ bzw. $\emptyset_2$, entspricht. Sofern alle Zeilenspeicher ZS1 bis ZSn mit den ihnen zugeordneten Zeilensignalen belegt sind, werden sie gleichzeitig mit den Taktimpulsspannungen $\emptyset_1$ und $\emptyset_2$ beaufschlagt, was durch die Zuführung eines Ausleseimpulses $\emptyset$ an sämtliche ODER-Gatter, 9a, 16a usw. erfolgt, der alle Schalter 9b, 16b usw. in die entsprechenden Schaltstellungen bringt. Dabei werden zuerst die unterhalb von TEm2 in sämtlichen Zeilenspeichern vorhandenen Ladungspakete beim Auftreten des ersten Taktimpulses $\emptyset_1$ den Diffusionsgebieten zugeführt, im Falle von ZS1 also dem Gebiet 10, und verändern das Potential dieser Gebiete, die zuvor auf ein Referenzpotential gebracht und anschließend von sämtlichen äußeren Potentialen freigeschaltet worden sind, so daß an den Ausgängen A1 bis An gleichzeitig Spannungssignale auftreten, die den zu der ersten Spalte und zu den Zeilen 1 bis n des Fernsehbildes gehörenden Abtast-

0008009

werten des Videosignals entsprechen. Diese Spannungssignale werden dann in den Verstärkern V1 bis Vn verstärkt und mittels der Schreibköpfe K1 bis Kn gleichzeitig und parallel in n Längsspuren des Aufzeichnungsträgers aufgezeichnet (Fig. 1). Anschließend werden die
zu den nächsten Spalten gehörenden Abtastwerte des
Videosignals in gleicher Weise als Spannungswerte ausgelesen und aufgezeichnet.

Die Eingangsstufen, z.B. 8·, die zum periodischen Injizieren von Ladungsträgern in die Zeilenspeicher dienen,
sind an sich in verschiedenen Ausführungen bekannt und
werden beispielsweise in dem Buch von Sequin und Tompsett
"Charge Transfer Devices", Academic Press Inc., New York,
1975, Seite 48 bis 50, insbesondere Fig. 3.12 (c) und (d)
und Seite 50, Zeilen 7 bis 30, beschrieben. Die Ausgangsstufen, z.B. 10, sind ebenfalls bekannt und werden
beispielsweise auf den Seiten 52 bis 54 und insbesondere
anhand der Figur 3.14 des genannten Buches beschrieben.

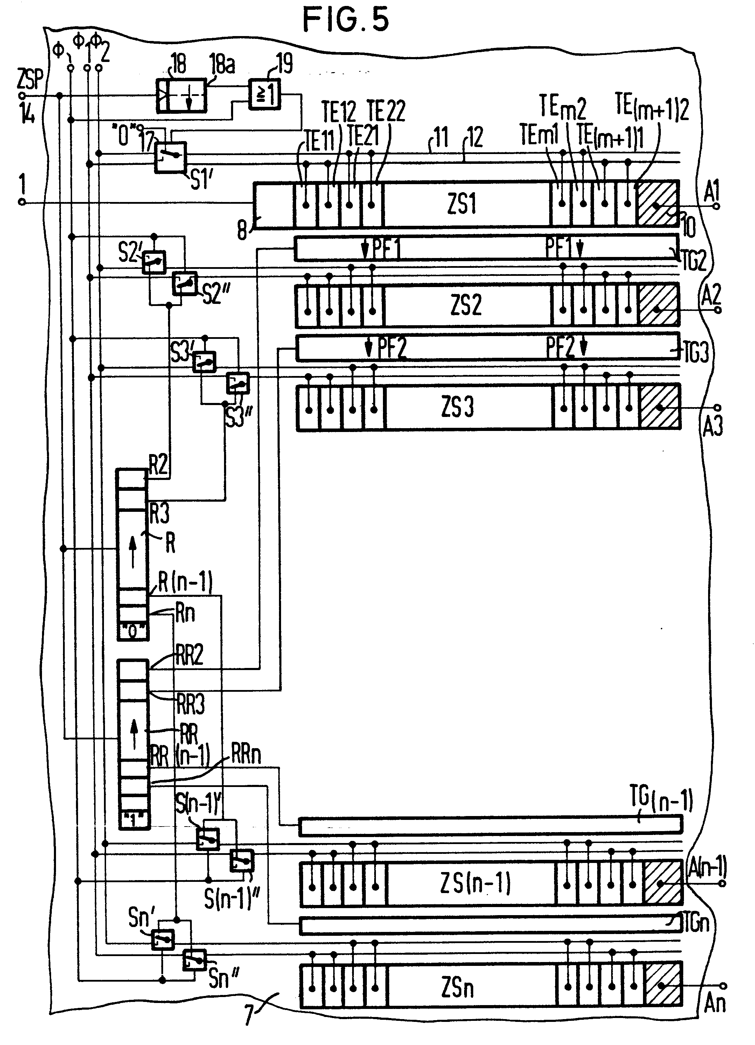

Figur 5 zeigt eine andere bevorzugte Ausführungsform der
in Figur 1 angedeuteten Speicheranordnung 2. Dabei ist
der Zeilenspeicher ZS1 in gleicher Weise aufgebaut wie
bei der Anordnung nach Figur 4, während die Zeilenspeicher ZS2 bis ZSn ohne Eingangsstufen ausgebildet sind.
Sämtliche Zeilensignale werden nach einer durch die Eingangsstufe 8 erfolgenden Abtastung einzelner Amplitudenwerte nacheinander in ZS1 eingelesen. Sämtliche Elektroden der einzelnen Zeilenspeicher sind zueinander parallel
über im Ruhezustand befindliche Schalter S2', S2" ...,
Sn', Sn" an die Ausgänge R2 bis Rn der einzelnen Stufen
eines Schieberegisters R geschaltet. Die Elektroden von
ZS1 sind zueinander parallel über einen im Ruhezustand
befindlichen Schalter S1' an einen Anschluß 17 geschaltet,
der auf einem Potential "0" liegt.

0008009

Nach dem Auftreten eines Zeilensynchronisierimpulses ZSP, der der ersten Zeile $Z_1$ zugeordnet ist, am Anschluß 14 wird ein Monoflop 18 aus seiner stabilen Lage gekippt und in einen Schaltzustand gebracht, in dem der Ausgang 18a spannungsführend ist. Damit erhält der Steuereingang des Schalters S1' über den Ausgang eines ODER-Gatters 19 eine Spannung zugeführt, die ihn in eine Schaltstellung bringt, in der er die Leitungen 11 und 12 jeweils mit den Taktimpulsspannungen $\emptyset_1$ und $\emptyset_2$ belegt. Unter dem Einfluß dieser Taktimpulsspannungen werden die Abtastwerte des ersten Zeilensignals in ZS1 eingeschrieben. Gleichzeitig mit diesem Einschreibvorgang läuft eine logische "0" in dem Schieberegister R, welches durch ZSP getriggert wird, schrittweise in Pfeilrichtung von unten nach oben, wobei die jeweils nicht mit der "0" belegten Stufen von R eine "1" aufweisen. Die Ausgänge Rn bis R2 werden auf diese Weise nacheinander vorübergehend spannungslos, wobei auch die Elektroden der einzelnen Zeilenspeicher ZSn bis ZS2 nacheinander vorübergehend spannungslos werden. Nach dem Durchlaufen des gesamten Schieberegisters R wird dann die "0" wieder in die unterste Stufe verschoben.

Nach dem vollständigen Einschreiben des ersten Zeilensignals in ZS1 und nach dem Verschieben der "0" in die unterste Stufe von R schaltet das Monoflop 18 wieder in seine stabile Lage. Der Steuereingang von S1' wird dadurch spannungslos und S1' nimmt wieder die gezeichnete Schaltstellung ein, in der sämtliche Elektroden von ZS1 über 17 auf "0" gelegt sind. Dabei erfolgt eine solche Potentialänderung unterhalb der Elektroden TE22, TE42 ... TEm2, daß die dort gespeicherten Ladungspakete in Richtung der Pfeile PF1 parallel und gleichzeitig in die Halbleiterbereiche unterhalb der entsprechenden Elektroden des Zeilenspeichers ZS2 verschoben werden. Nach dem Eintreffen des

0008009

nächsten Zeilensynchronisierimpulses ZSP beginnt sowohl das Einlesen des zweiten Zeilensignals in ZS1 als auch ein neuer Durchlauf der "0" im Schieberegister R, wobei die "0" beim Erreichen des Ausgangs R2 die bereits einmal verschobenen Ladungspakete von ZS2 nach ZS3 verschiebt (Pfeile PF2). Das sich anschließende Rückkippen von 18 bewirkt sodann eine Verschiebung der die Abtastwerte des zweiten Zeilensignals darstellenden Ladungspakete von ZS1 nach ZS2. Nach dem Ablauf von n Einschreibvorgängen und den parallel dazu ablaufenden, über R gesteuerten Verschiebevorgängen sind dann n Zeilensignale in die einzelnen Zeilenspeicher eingeschrieben, wobei das die Zeile $Z_1$ beschreibende Zeilensignal in ZSn und das die Zeile Zn beschreibende Zeilensignal in ZS1 enthalten sind. Durch eine gleichzeitige Ansteuerung der Elektroden der Zeilenspeicher ZS1 bis ZSn mit den Taktimpulsspannungen $\emptyset_1$ und $\emptyset_2$, die durch Zuführung eines Ausleseimpulses $\emptyset$ an den unteren Eingang von 19 sowie an die Schalter S2', S2'' ... Sn', Sn'' bewirkt wird, werden wieder alle gespeicherten Zeilensignale gleichzeitig und parallel an den Ausgängen A1 bis An ausgelesen.

Zur Verringerung der gegenseitigen Störungen, die beim Verschieben der Ladungspakete entsprechend den Pfeilen PF1, PF2 usw. dadurch auftreten können, daß Teile der Ladungspakete den Pfeilrichtungen entgegenlaufen, können in Figur 5 gemäß einer bevorzugten Weiterbildung zwischen den Elektrodenreihen der Zeilenspeicher Transfergates TG2 bis TGn vorgesehen werden. Diese bestehen aus metallischen Belegungen oder aus stark dotiertem, polykristallinem Silizium und befinden sich auf der das Substrat 7 abdeckenden elektrisch isolierenden Schicht. Sie sind jeweils mit den Ausgängen RR2, RR3 ... RRn eines weiteren Schieberegisters RR leitend verbunden, in dem eine logische "1" in Pfeilrichtung durchläuft. Ein solcher Durchlauf wird

0008009

jeweils bei Zuführung eines Zeilensynchronisierimpulses ZSP veranlaßt. Die jeweils nicht mit der "1" belegten Stufen von RR weisen eine "0" auf. Der Durchlauf der logischen "1" in RR ist auf den Durchlauf der logischen "0" in R so abgestimmt, daß jeweils nur dasjenige Transfergate, z.B. TGn, mit einer Spannung belegt wird, das in Richtung der Pfeile PF1, PF2 usw. neben einer gerade von einer Ausgangsspannung des Schieberegisters R freigeschalteten Elektrodenreihe, z.B. von ZS(n-1), liegt. Dies wird durch das Einfügen einer zusätzlichen Stufe zwischen die unterste Stufe von RR und die Stufe mit dem Ausgang RRn erreicht. Bei gleicher Taktfrequenz der Schieberegister R und RR ist der Ausgang RR2 erst dann mit der "1" belegt, wenn die "0" wieder in die eingezeichnete Lage verschoben worden ist, also zu dem Zeitpunkt, zu dem die Elektroden von ZS1 über S1' mit "0" belegt sind.

Werden die Zeilensignale eines Fernsehbildes zu mehreren Gruppen zusammengefaßt, wie dies durch die Streifen S1 bis Sp in Figur 2 angedeutet ist, so kann mit Vorteil eine Weiterbildung des erfindungsgemäßen Verfahrens verwendet werden, die anhand der in Figur 6 dargestellten Schaltungsanordnung erläutert wird. Dabei tragen Schaltungsteile, die bereits anhand der Figuren 1 und 3 beschrieben wurden, die gleichen Bezugszeichen wie oben. Zum Unterschied gegenüber der Schaltung nach Figur 1 ist außer der Speicheranordnung 2 eine zweite, gleichartig aufgebaute Speicheranordnung 2' vorgesehen, deren Ausgänge den entsprechenden Ausgängen A1 bis An der Speicheranordnung 2 parallel geschaltet sind. Beide Anordnungen sind über Schalter 20 und 21 mit dem Schaltungseingang 1 verbunden. Weiterhin ist ein Zähler 22 vorgesehen, der über einen Zähleingang 23 mit den Zeilensynchronisierimpulsen ZSP beaufschlagt wird und eine Zählkapazität aufweist, die der zu einer Gruppe gehörenden Zeilenzahl
n entspricht. Der Zählerausgang ist mit dem Takteingang
eines Flipflops 24 verbunden, dessen Ausgänge mit Q und $\bar{Q}$
bezeichnet sind. Nimmt man an, daß zu Beginn der Aufzeichnung eines Videosignals $u_v$ der Ausgang Q spannungsführend ist, der Ausgang $\bar{Q}$ dagegen nicht, so ist der
Schalter 20 in eine Schaltstellung gebracht, in der die
Speicheranordnung 2 mit dem Eingang 1 verbunden ist. Dabei werden die ersten n Zeilensignale in der beschriebenen
Weise in die Speicheranordnung 2 eingelesen. Nach dem Eintreffen von n+1 Zeilensynchronisierimpulsen wird vom
Zähler 22 ein Überlaufimpuls an das Flipflop 24 abgegeben,
der das letztere umschaltet. Dabei wird dann der Ausgang
$\bar{Q}$ spannungsführend, während Q spannungslos wird. Das bewirkt das Schließen des Schalters 21, während der Schalter
20 wieder in die gezeichnete Ruhelage gelangt. In dieser
Stellung des Flipflops 24 werden also die die Zeilen
$Z_{n+1}$ bis $Z_{2n}$ beschreibenden Zeilensignale in die Speicheranordnung 2' eingelesen, während gleichzeitig die in 2
gespeicherten Informationen parallel über die Ausgänge A1
bis An ausgelesen werden. Nach dem Auftreten von 2n+1 Zeilensynchronisierimpulsen ZSP gibt der Zähler 22 einen weiteren Überlaufimpuls ab, der das Flipflop 24 wieder in die
ursprüngliche Stellung zurücksetzt, so daß die die Zeilen
$Z_{2n+1}$ bis $Z_{3n}$ beschreibenden Zeilensignale in 2 eingelesen
werden, während die vorher in 2' gespeicherten Signale
ihrerseits über A1 bis An ausgelesen werden. Bei dieser
Weiterbildung des Verfahrens kann die Auslesung der einen
Speicheranordnung, z.B. 2, in der Zeitspanne erfolgen, die
zum Einlesen der folgenden Gruppe von Zeilensignalen in die
andere Speicheranordnung, z.B. 2', erforderlich ist.

Figur 7 zeigt eine Schaltungsanordnung zur Wiedergabe der
aufgezeichneten Videosignale $u_v$, bei der die Auslesung
einer Gruppe von Zeilensignalen aus der weiteren Speicheranordnung 6 in einer Zeit spanne erfolgt, während der die nächstfolgende Gruppe von Zeilensignalen in eine gleichartige weitere Speicheranordnung 6' eingelesen wird. Zu diesem Zweck sind die Eingänge der weiteren Speicheranordnung 6' den Eingängen E1 bis En derSpeicheranordnung 6 parallel geschaltet, wobei noch Schalter 20' und 21' in den Speicherzuleitungen vorgesehen sind. Die Ausgänge von 6 und 6' sind an den gemeinsamen Speicherausgang 5 geführt. Die Ansteuerung der Schalter 20' und 21' erfolgt in der anhand von Figur 6 beschriebenen Weise über einen Zähler 22' und ein Flipflop 24' mittels Zeilensynchronisierimpulsen ZSP, die dem Zählereingang 23' zugeführt werden.

Die bei der Wiedergabe des gespeicherten Videosignals $u_v$ benötigte weitere Speicheranordnung 6 bzw. 6' kann weitgehend entsprechend den Figuren 4 oder 5 aufgebaut sein. Um die Speicheranordnung nach Figur 4 hierfür zu adaptieren, ist es erforderlich, die Anschlüsse A1 bis An als Eingänge der weiteren Speicheranordnung zu definieren und den Anschluß 1 als Ausgang 5 der weiteren Speicheranordnung zu verwenden. Die Stufen 10 sind dabei als Eingangsstufen aufzufassen, die Stufen 8 als Ausgangsstufen. Die Taktimpulsspannungen $\phi_1$ und $\phi_2$ werden zunächst über sämtliche Schalter 9b, 16b usw. angeschaltet, um ein gleichzeitiges Einlesen der n nebeneinander aufgezeichneten Zeilensignale in die Zeilenspeicher ZS1 bis ZSn zu veranlassen. Erst danach läuft dann die logische "1" im Schieberegister 13 in Pfeilrichtung um und bewirkt die Auslesung der einzelnen Zeilenspeicher nacheinander. Die Verschiebung der Ladungspakete in den Zeilenspeichern geschieht dabei nicht in der bisher beschriebenen Richtung von links nach rechts, sondern von rechts nach links, wobei jeweils die Elektroden TE12, TE22, TE32 usw. der Zeilenspeicher auf dickeren elektrisch isolierenden Schichten angeordnet sind als die Elektroden TE11, TE21, TE31, usw..

Wenn die Speicheranordnung 2 gemäß Figur 5 aufgebaut ist, so wird die weitere Speicheranordnung 6 bzw. 6' zweckmäßigerweise nach demselben Prinzip aufzubauen sein, wobei ausgehend von Figur 5 folgende Adaptierungen vorzunehmen sind: Die Anschlüsse A1 bis An stellen die Eingänge der weiteren Speicheranordnung dar, wobei die Gebiete 10 dann die Bedeutung von Eingangsstufen haben. Nach dem parallelen Einlesen sämtlicher Zeilensignale mittels der Taktimpulsspannungen $\emptyset_1$ und $\emptyset_2$, die über die Schalter S1' und S2', S2'' bis Sn', Sn'' zugeführt werden, erfolgt eine Auslesung der gespeicherten Informationen in der Weise, daß der Zeilenspeicher ZSn wiederholt ausgelesen wird. Zu diesem Zweck ist ein in Figur 5 nicht dargestelltes Ausgangsgebiet am linken Ende der Elektrodenreihe von ZSn vorgesehen, das mit dem Speicherausgang 5 verbunden ist. Das Gebiet 8 und der Anschluß 1 von Figur 5 haben hierbei keine Bedeutung. Nach jedem Auslesevorgang bezüglich des Zeilenspeichers ZSn erfolgt ein Durchlauf der logischen Signale "0" und "1" durch die Schieberegister R und RR in der gezeichneten Pfeilrichtung, wodurch jeweils eine weitere Informationszeile unter die Elektrodenreihe von ZSn verschoben und einer seriellen Auslesung zugeführt wird. Auch hierbei sind die dünneren und dickeren Teile der elektrisch isolierenden Schicht in ihrer Zuordnung zu den Elektroden jeweils vertauscht, wie bereits im vorhergehenden Absatz erwähnt. Sn' und Sn'' werden angesteuert wie S1' in Figur 5 und S1' wird angesteuert über eine weitere, R2 nachgeschaltete Stufe von R.

Anstelle der in den Figuren 4 und 5 beschriebenen Ausführungsform der in den Speicheranordnungen 2 und 6 bzw. 2' und 6' enthaltenen Zeilenspeicher können auch andere integrierte Ladungsverschiebeanordnungen, die unter der Bezeichnung "Charge Transfer Devices" (CTD) bekannt sind, verwendet werden. So können beispielsweise an sich bekannte Eimerkettenschaltungen (BBD) verwendet werden oder auch BCCD-Anordnungen, bei denen ein Ladungstransport nicht an der Oberfläche, sondern im Inneren des

Substrates erfolgt. Derartige Anordnungen sind beispielsweise in dem Buch von Sequin und Tompsett "Charge Transfer Devices" Academic Press Inc., New York, 1975, auf den Seiten 1 bis 18 behandelt. Außerdem können neben den bisher beschriebenen Zwei-Phasen-Anordnungen auch an sich bekannte Drei-, Vier- oder mehrphasige Anordnungen verwendet werden, wie sie beispielsweise in dem vorstehend genannten Buch auf den Seiten 19 bis 30 beschrieben werden.

Figur 8 zeigt eine andere Weiterbildung der Schaltung von Figur 1. Hier sind wie in Figur 6 zwei Speicheranordnungen 2 und 2' vorgesehen, wobei jeweils in die eine Speicheranordnung, z.B. 2', eine Gruppe von Zeilensignalen eingelesen wird, während aus der anderen Speicheranordnung, z.B. 2, die vorher eingespeicherte Gruppe von Zeilensignalen ausgelesen wird. Auch die Schalter 20 und 21 entsprechen denen von Figur 6. Lediglich ihre Ansteuerung ist insoweit abgeändert, als ein Zähler 25 vorgesehen ist, dessen Ausgänge 1, 2, (n-1) und n mit den Steuereingängen beider Schalter 20 und 21 verbunden sind, während die Ausgänge 3 bis (n-2) ausschließlich an die Steuereingänge von 20 und die Ausgänge (n+1) bis (2n-4) ausschließlich an die Steuereingänge von 21 geführt sind. Der Eingang des Schalters 25 ist an den Schaltungspunkt 23 gelegt, an dem die Zeilensynchronisierimpulse ZSP des Videosignals $u_V$ auftreten. Während des Eintreffens der ersten 2n-4 Zeilensynchronisierimpulse sind die Zählerausgänge 1 bis 2n-4 nacheinander spannungsführend, wobei über jeden Ausgang der eine, der andere oder beide Schalter 20, 21 in der Art betätigt werden, daß sie den Eingang der zugeordneten Speicheranordnung mit dem Schaltungspunkt 1 jeweils für die Dauer eines Zeilensignals leitend verbinden. Beim Eintreffen der nächsten 2n-4 Zeilensynchronisierimpulse wird sodann eine neue Markierungsfolge der Zählerausgänge durchlaufen, was sich periodisch fortsetzt. Damit ergibt

0008009

sich, beginnend mit der den dritten Streifen S3 darstellenden Gruppe von Zeilensignalen eine solche Aufteilung der einzelnen Zeilensignale auf die Speicheranordnungen 2 und 2', daß jeweils die ersten beiden
Zeilensignale der in einer dieser Anordnungen, z.B. 2,
gespeicherten Gruppe mit den letzten beiden Zeilensignalen der in der anderen Anordnung,z.B. 2', gespeicherten,
vorhergehenden Gruppe identisch sind, während andererseits die letzten beiden Zeilensignale der in der betrachteten Anordnung, z.B. 2', gespeicherten Gruppe
identisch sind mit den ersten beiden Zeilensignalen der
nachfolgenden, in der anderen Anordnung, z.B. 2, gespeicherten Gruppe. Somit überlappen sich die in 2 und
2' gespeicherten Informationsblöcke jeweils um zwei
Zeilen. Schaltet man beispielsweise auch die Zählerausgänge 3 und (n-2) auf die Steuereingänge beider
Schalter 20 und 21, und sieht als letzten Zählerausgang
den Ausgang 2n-5 vor, so kann die gegenseitige Überlappung
auf drei Zeilen ausgedehnt werden usw..

Figur 9 zeigt eine Schaltung, die zur Wiedergabe eines
mit einer Anordnung nach Figur 8 aufgezeichneten Videosignals geeignet ist. Die Teile 6, 6' und 20' bis 24'
entsprechen nach Aufbau und Wirkungsweise den anhand
von Figur 7 beschriebenen, mit gleichen Bezugsziffern
versehenen Teilen. Wie in Figur 7 gelangen auch hier
nacheinander aufgezeichnete Informationsblöcke beim Auslesen alternierend in die weiteren Speicheranordnungen
6 und 6'. Die Ausgänge von 6 und 6' sind einerseits
zueinander parallel geschaltet und über einen Schalter
26 an einen gemeinsamen Speicherausgang 5 geführt und
andererseits jeder für sich über einen zweipoligen Schalter 27 an die beiden Eingänge einer mittelwertbildenden
Schaltung 28 gelegt, deren Ausgang mit dem Speicherausgang 5 verbunden ist. Ein Zähler 25', der dem Zähler 25

0008009

nach Aufbau und Wirkungsweise entspricht, ist zur Ansteuerung der Schalter 26 und 27 vorgesehen. Dabei sind jedoch nur die in Figur 8 an beide Schalter 20 und 21 geführten Ausgänge 1, 2, (n-1) und n an die Steuereingänge beider Schalter 26 und 27 geführt, während die übrigen Zählerausgänge unbeschaltet bleiben. Der Eingang des Zählers 25' ist an den Anschluß 23' gelegt, an dem die Zeilensynchronisierimpulse ZSP auftreten. Werden Zeilensignale ausgelesen, die nur in einer der Speicheranordnungen 6, 6' gespeichert sind, so werden die Schalter 26 und 27 nicht mit Steuerspannungen beaufschlagt und bleiben in ihrer gezeichneten Ruhelage, wobei 26 beide Speicherausgängen an den gemeinsamen Speicherausgang 5 durchschaltet, während 27 die Speicherausgänge von der Schaltung 28 abtrennt. Die Auslesephasen der Speicheranordnungen 6 und 6' sind so aufeinander abgestimmt, daß gleichzeitig mit dem Auslesen des vorletzten Zeilenspeichers der einen Speicheranordnung, z.B. 6, die Auslesung des ersten Zeilenspeichers der anderen Speicheranordnung erfolgt. Beim Auftreten der in beiden Anordnungen 6 und 6' gleichzeitig gespeicherten Zeilensignale, d.h. beim Auftreten einer Ausgangsspannung an den Zählerausgängen 1, 2, (n-1) oder n werden die Schalter 26 und 27 betätigt, wobei 26 die zueinander parallel geschalteten Zählerausgänge vom Ausgang 5 abtrennt und 27 die nebeneinander geführten Zählerausgänge mit der Schaltung 28 verbindet. Dabei werden jeweils die die gleiche Zeile des Fernsehbildes beschreibenden, getrennt gespeicherten Zeilensignale zu einem einzigen Zeilensignal zusammengesetzt, dassen Amplitude den Mittelwerten der beiden getrennt gespeicherten Zeilensignale entspricht. Auf diese Weise gelingt es, Störungen, die durch die örtlich getrennte Aufzeichnung der an den Grenzen der einzelnen Streifen S1 bis Sp (Figur 1) vorhandenen Bildinformationen unter Umständen auftreten, weitgehend auszuschalten.

Während das anhand der Figuren 1 bis 9 bisher beschriebene Verfahren zur Aufzeichnung und Wiedergabe eines Videosignals $u_v$ schwarz-weißen Inhalts dient, soll anhand der Figur 10 eine Erweiterung des Verfahrens zum Zwecke der Aufzeichnung und Wiedergabe von Videosignalen farbigen Inhalts erläutert werden. Die Schaltungsanordnung nach Figur 10 unterscheidet sich von der der Figuren 1 und 3 zunächst dadurch, daß dem Eingang 1 ein an sich bekannter Dekoder 29 vorgeschaltet ist, der ein am Schaltungspunkt 1a auftretendes Videosignal $u_v$ farbigen Inhalts in ein dem Schaltungspunkt 1 zugeführtes Luminanzsignal und zwei zugehörige Farbdifferenzsignale aufspaltet, die jeweils den Schaltungspunkten 1' und 1'' zugeführt werden. Zwischen den Schaltungspunkten 1 und 5 von Figur 10 befindet sich eine gemäß den Figuren 1 und 3 oder gemäß den Figuren 6 und 7 bzw. den Figuren 8 und 9 ausgebildete Schaltung, die zur Aufzeichnung und Wiedergabe des Luminanzsignals dient. Die zwischen den Speicherausgängen A1 bis An und den Speichereingängen E1 bis En liegenden Schaltungsteile sind in Figur 10 aus Gründen der Übersichtlichkeit nicht dargestellt, der Aufzeichnungsträger ist lediglich mit 3 angedeutet. Zwischen den Schaltungspunkten 1' und 5' und zwischen 1'' und 5'' sind nun in Figur 10 weitere Schaltungen vorgesehen, die derjenigen zwischen den Punkten 1 und 5 nach dem prinzipiellen Aufbau entsprechen. Diese dienen zur Aufzeichnung und Wiedergabe der bei 1' und 1'' zugeführten Farbdifferenzsignale. Wie aus Figur 10 ersichtlich, muß dabei die Anzahl der Längsspuren auf dem Aufzeichnungsträger 3 soweit erhöht werden, daß neben den über A1 bis An übertragenen Zeilensignalen gleichzeitig auch die für die Farbdifferenzsignale benötigten Zeilensignale parallel aufgezeichnet werden können. Dementsprechend muß die Breite des Aufzeichnungsträgers 3 vergrößert werden oder die Zahl n gegenüber dem Verfahren zur Aufzeichnung von Videosignalen schwarz-weißen Inhalts soweit verkleinert werden, daß ohne eine Vergrößerung der Breite des Aufzeichnungsträgers die verfügbaren Längsspuren zur Speicherung der Zeilensignale für das Luminanzsignal und die Farbdifferenzsignale aufgeteilt werden können. Die an den Schaltungspunkten 5, 5' und 5'' auftretenden Signale werden dann in einem Kodierer 30 wieder zu einem Videosignal $u_v'$ farbigen Inhalts zusammengesetzt, das am Schaltungsausgang 5a abgreifbar ist.

Nach einer Variante des letztgenannten Verfahrens kann die Zerlegung des Videosignals im Dekoder 29 auch in drei Farbsignale erfolgen, die dann jeweils an den Schaltungspunkten 1, 1' und 1'' zur Verfügung stehen. Auch in diesem Falle werden die an den Schaltungspunkten 5, 5' und 5'' auftretenden Farbsignale im Kodierer 30 wieder zum Videosignal $u_v'$ zusammengesetzt.

17 Patentansprüche
10 Figuren

Patentansprüche

1. Verfahren zum Speichern von Videosignalen auf einem bandförmigen, kontinuierlich bewegbaren Aufzeichnungsträger mit einer Zerlegung des Videosignals in mehrere Teilsignale und gleichzeitiger Aufzeichnung derselben in mehreren zueinander parallelen Längsspuren, dadurch g e k e n n z e i c h n e t , daß die Zeilensignale des Videosignals ($u_v$) als Teilsignale benutzt werden, daß die zu einem Fernsehbild gehörenden Zeilensignale zu wenigstens einer Gruppe zusammengefaßt und gruppenweise nacheinander aufgezeichnet werden, daß sämtliche jeweils zu ein und derselben Gruppe gehörenden Zeilensignale nach einer Zwischenspeicherung gleichzeitig auf ihnen individuell zugeordneten Längsspuren aufgezeichnet werden und daß bei einer Mehrzahl von Gruppen die Zeilensignale derselben so ausgewählt werden, daß sie gruppenweise eine Mehrzahl von horizontalen, streifenförmigen Teilbereichen (S1, S2 ...) des Fernsehbildes in einer durch das letztere gegebenen Reihenfolge überdecken.

2. Verfahren nach Anspruch 1, dadurch g e k e n n z e i c h n e t , daß die aufgezeichneten Zeilensignale gruppenweise nacheinander gelesen und zu einem Videosignal ($u_v'$) zusammengesetzt werden, wobei sämtliche jeweils zu ein und derselben Gruppe gehörenden Zeilensignale parallel gelesen und nach einer Zwischenspeicherung seriell wiedergegeben werden.

3. Verfahren nach einem der Ansprüche 1 oder 2, dadurch g e k e n n z e i c h n e t , daß während des Aufzeichnens bzw. Wiedergebens einer Gruppe von Zeilensignalen die nächstfolgende Gruppe zwischengespeichert wird.

0008009

4. Verfahren nach Anspruch 1 oder 3, dadurch g e - k e n n z e i c h n e t , daß die Zeilensignale ein und derselben Gruppe periodisch abgetastet werden, daß die dabei gebildeten Folgen von Abtastwerten in Zeilenspeicher, die den Zeilensignalen individuell zugeordnet sind, nacheinander eingegeben werden und daß die jeweils zu einer Spalte des Fernsehbildes gehörenden, in die Zeilenspeicher eingegebenen Abtastwerte gleichzeitig ausgelesen und aufgezeichnet werden.

5. Verfahren nach Anspruch 2 oder 3 und Anspruch 4, dadurch g e k e n n z e i c h n e t , daß die jeweils zu einer Spalte des Fernsehbildes gehörenden, aufgezeichneten Abtastwerte sämtlicher Zeilensignale ein und derselben Gruppe gleichzeitig gelesen werden und daß die gelesenen Zeilensignale parallel in weitere Zeilenspeicher, die den Zeilensignalen individuell zugeordnet sind, eingegeben und aus diesen seriell ausgelesen werden, so daß die Abtastwerte sämtlicher Zeilensignale dieser Gruppe in der Reihenfolge des Fernsehbildes nacheinander wiedergegeben werden.

6. Verfahren nach einem der Ansprüche 3 bis 5, dadurch g e k e n n z e i c h n e t , daß die Zeilensignale bei einer gemeinsamen Zwischenspeicherung von zwei jeweils aufeinanderfolgenden Gruppen derart auf diese aufgeteilt werden, daß die letzten z Zeilensignale ($z = 1$, 2, 3 usw.) der vorhergehenden Gruppe mit den ersten z Zeilensignalen der folgenden Gruppe identisch sind.

7. Verfahren nach Anspruch 6, dadurch g e k e n n - z e i c h n e t , daß bei der Wiedergabe von zwei jeweils gemeinsam zwischengespeicherten, aufeinanderfolgenden Gruppen mit teilweise identischen Zeilensignalen die serielle Ausgabe der Zeilensignale beider Gruppen zeitlich derart aufeinander abgestimmt ist, daß

die miteinander identischen Zeilensignale gleichzeitig ausgegeben und mittels einer mittelwertbildenden Schaltung jeweils zu einem einzigen Zeilensignal zusammengesetzt werden.

8. Verfahren nach einem der vorhergehenden Ansprüche, dadurch g e k e n n z e i c h n e t , daß ein Farb-Videosignal in drei Signalkomponenten dekodiert wird und jede der Signalkomponenten als ein eigenes Videosignal aufgezeichnet und gegebenenfalls gelesen wird.

9. Verfahren nach Anspruch 6, dadurch g e k e n n - z e i c h n e t , daß die Signalkomponenten aus drei Farbsignalen bestehen.

10. Verfahren nach Anspruch 6, dadurch g e k e n n - z e i c h n e t , daß die Signalkomponenten aus einem Luminanz- und zwei Farbdifferenzsignalen bestehen.

11. Schaltungsanordnung zur Durchführung des Verfahrens nach Anspruch 1, dadurch g e k e n n z e i c h n e t , daß eine Speicheranordnung mit einer Mehrzahl von als Ladungsverschiebeanordnungen (CTD) ausgebildeten Zeilenspeichern (ZS 1..ZSn) vorgesehen ist, die den einzelnen zu einer Gruppe zusammengefaßten Zeilensignalen individuell zugeordnet sind, daß die Ladungsverschiebeanordnungen Eingangsstufen (8) enthalten, die alternativ mit einem das Videosignal führenden Eingang (1) der Speicheranordnung verbindbar sind, daß die Ausgänge (A1 ... An) der Ladungsverschiebeanordnungen über Verstärker (V1...Vn) an Schreibköpfe (K1...Kn) geschaltet sind, die zur Aufzeichnung von elektrischen Signalen auf dem Aufzeichnungsträger (3) dienen und daß die Ladungsverschiebeanordnungen an Auslese-Taktimpulsspannungs-Leitungen parallel anschaltbar sind.

St1The/

12. Schaltungsanordnung zur Durchführung des Verfahrens nach Anspruch 1, dadurch g e k e n n z e i c h n e t , daß eine Speicheranordnung mit einer Mehrzahl von als Ladungsverschiebeanordnungen (CTD) ausgebildeten Zeilenspeichern (ZS1...ZSn) vorgesehen ist, die den einzelnen zu einer Gruppe zusammengefaßten Zeilensignalen individuell zugeordnet sind, daß die erste Ladungsverschiebeanordnung (ZS1) mit einer Eingangsstufe (8) versehen ist, die mit einem das Videosignal führenden Eingang (1) der Speicheranordnung verbunden ist, daß die jeder einzelnen Ladungsverschiebeanordnung zugehörigen Elektroden zueinander parallel schaltbar sind und daß die parallelgeschalteten Elektroden aller Ladungsverschiebeanordnungen mit Taktimpulsspannungsleitungen verbindbar sind, über die eine parallele Verschiebung der jeweils in die erste Ladungsverschiebeanordnung (ZS1) eingelesenen Informationen auf die nächstfolgenden Ladungsverschiebeanordnungen (ZS2, ZS3...) veranlaßt wird, daß die Ausgänge der Ladungsverschiebeanordnungen über Verstärker (V1...Vn) an Schreibköpfe (K1...Kn) geschaltet sind, die zur Aufzeichnung von elektrischen Signalen auf dem Aufzeichnungsträger (3) dienen und daß die Ladungsverschiebeanordnungen an Auslese-Taktimpulsspannungs-Leitungen parallel anschaltbar sind.

13. Schaltungsanordnung zur Durchführung des Verfahrens nach Anspruch 2, dadurch g e k e n n z e i c h n e t , daß eine weitere Speicheranordnung (6) mit einer Mehrzahl von als Ladungsverschiebeanordnungen (CTD) ausgebildeten Zeilenspeichern (ZS1...ZSn) vorgesehen ist, die den einzelnen zu einer Gruppe zusammengefaßten Zeilensignalen individuell zugeordnet sind, daß die Ladungsverschiebeanordnungen mit Eingangsstufen versehen sind, die über Verstärker (V1'...Vn') mit Leseköpfen (K1'...Kn') verbunden sind, die zum Lesen von auf dem Aufzeichnungs-

0008009

träger (3) gespeicherten Informationen dienen, daß Ausgangsstufen der Ladungsverschiebeanordnungen vorgesehen sind, die alternativ mit einem Ausgang (5) der Speicheranordnung verbunden sind und daß die jeweils mit dem Ausgang (5) verbundenen Ladungsverschiebeanordnungen an Auslese-Taktimpulsspannungs-Leitungen anschaltbar sind.

14. Schaltungsanordnung zur Durchführung des Verfahrens nach Anspruch 2, dadurch g e k e n n z e i c h n e t , daß eine weitere Speicheranordnung (6) mit einer Mehrzahl von als Ladungsverschiebeanordnungen (CTD) ausgebildeten Zeilenspeichern (ZS1..ZSn) vorgesehen ist, die den einzelnen zu einer Gruppe zusammengefaßten Zeilensignalen individuell zugeordnet sind, daß Eingangsstufen der Ladungsverschiebeanordnungen vorgesehen sind, die über Verstärker (V1'.. Vn') mit Leseköpfen (K1'...Kn') verbunden sind, die zum Lesen von auf dem Aufzeichnungsträger (3) gespeicherten Informationen dienen, daß eine randseitig angeordnete Ladungsverschiebeanordnung mit einer Ausgangsstufe versehen ist, die mit einem Ausgang (5) der weiteren Speicheranordnung (6) verbunden ist, daß die jeder einzelnen Ladungsverschiebeanordnung zugehörigen Elektroden zueinander parallelschaltbar sind, daß die parallel geschalteten Elektroden aller Ladungsverschiebeanordnungen mit Taktimpulsspannugs-Leitungen verbindbar sind, über die eine Parallelverschiebung der jeweils in die einzelnen Ladungsverschiebeanordnungen eingelesenen Informationen in Richtung auf die randseitig angeordnete Ladungsverschiebeanordnung veranlaßt wird und daß der Ausgang (5) der weiteren Speicheranordnung (6) als Schaltungspunkt dient, an dem das wiedergegebene Videosignal ($u_v'$) abgreifbar ist.

15. Schaltungsanordnung nach Anspruch 12 oder 14, dadurch g e k e n n z e i c h n e t , daß zwischen den einzel-

nen Ladungsverschiebeanordnungen Transfergateelektroden (TG2, TG3...TGn) vorgesehen sind, die zur Definition der Verschieberichtung der zwischen benachbarten Ladungsverschiebeanordnungen jeweils übertragenen elektrischen Ladungen dienen.

16. Schaltungsanordnung zur Durchführung des Verfahrens nach Anspruch 3, dadurch g e k e n n z e i c h n e t , daß zwei gleichartig aufgebaute Speicheranordnungen (2,2') und zwei gleichartig aufgebaute weitere Speicheranordnungen (6, 6') vorgesehen sind, daß die Eingänge der beiden Speicheranordnungen (2, 2') über Schalter (20, 21) mit einem das Videosignal führenden Schaltungseingang (1) alternierend verbindbar sind, daß die Eingänge der beiden weiteren Speicheranordnungen (6, 6') über Schalter (20,21') mit einer Mehrzahl von Leseköpfen (K1'...Kn!) alternierend verbindbar sind, die zur Wiedergabe von auf dem Aufzeichnungsträger (3) gespeicherten Informationen dienen und daß die Ausgänge der beiden Speicheranordnungen (2,2') sowie der beiden weiteren Speicheranordnungen (6,6') jeweils zueinander parallelgeschaltet sind.

17. Schaltungsanordnung zur Durchführung des Verfahrens nach den Ansprüchen 6 und 7, dadurch g e k e n n - z e i c h n e t , daß zwei gleichartig aufgebaute Speicheranordnungen (2, 2') und zwei gleichartig aufgebaute weitere Speicheranordnungen (6, 6') vorgesehen sind, daß die Eingänge der beiden Speicheranordnungen (2, 2') über Schalter (20, 21) mit einem das Videosignal führenden Schaltungseingang (1) alternierend verbindbar sind, daß die Eingänge der beiden weiteren Speicheranordnungen (6,6') über Schalter (20', 21') mit einer Mehrzahl von Leseköpfen (K1'...Kn') alternierend verbindbar sind, die zur Wiedergabe von auf dem Aufzeichnungsträger (3) gespeicherten Informationen dienen, daß die Ausgänge der beiden Speicher-

78 P 7 0 8 2

anordnungen (2,2') zueinander parallel geschaltet sind, daß die Ausgänge der beiden weiteren Speicheranordnungen (6, 6') einerseits zueinander parallelgeschaltet und über einen ausgangsseitigen Schalter (26) an einen gemeinsamen Speicherausgang (5) geführt sind und andererseits getrennt über einen zweipoligen Schalter (27) an eine mittelwertbildende Schaltung (28) angeschlossen sind, deren Ausgang an den gemeinsamen Speicherausgang (5) geschaltet ist, daß die Steuereingänge der den beiden Speicheranordnungen (2,2') zugeordneten Schalter (20, 21) unter teilweiser Parallelschaltung an die Ausgänge eines mit Zeilensynchronisierimpulsen beaufschlagten, ersten Zählers (25) geschaltet sind und daß die Steuereingänge des ausgangsseitigen Schalters (26) und des zweipoligen Schalters (27) zueinander parallel und an die Ausgänge eines zweiten (25'), dem ersten (25) entsprechenden Zählers geschaltet sind.

## FIG 1

## FIG 2

## FIG 3

FIG 4

FIG.5

FIG 6

FIG 7

FIG 8

FIG 9

## FIG 10

Europäisches
Patentamt

**EUROPÄISCHER RECHERCHENBERICHT**

00080O9

Nummer der Anmeldung

EP 79 10 2393

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | US - A - 3 975 764 (KOBAYASHI)  * Spalte 6, Zeile 26 - Spalte 7, Zeile 60 *  -- | 1-5 | H 04 N 5/79 |
| | US - A - 3 806 640 (FURUKAWA)  * Spalte 3, Zeile 19 - Spalte 4, Zeile 13 *  -- | 1,2 | |
| A | US - A - 3 806 644 (BROWNE)  * Spalte 5, Zeilen 22-43 *  ---- | 3 | **RECHERCHIERTE SACHGEBIETE (Int. Cl. 3)**  H 04 N 5/79 H 04 N 5/785 H 04 N 9/535 H 04 N 7/12 H 04 N 5/78 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-11-1979 | VERSCHELDEN |

EPA form 1503.1  06.78